# EUROPEAN PATENT SPECIFICATION

(11) **EP 1 533 523 B1**
(45) Date of publication and mention of the grant of the patent: **28.02.2007**
(21) Application number: 04027474.8
(22) Date of filing: 19.11.2004
(51) Int. Cl.: F04B 35/04, F04B 39/00, F04C 29/00, H02K 5/22

(54) **Motor compressor**
Motor- und Kompressor-Einheit
Unité de moteur et compresseur

(30) Priority: 21.11.2003 JP 2003392359
(43) Date of publication of application: 25.05.2005
(73) Proprietor: KABUSHIKI KAISHA TOYOTA JIDOSHOKKI, Kariya-shi, Aichi-ken (JP)
(72) Inventor: Kimura, Kazuya, Kariya-shi Aichi-ken (JP); Shimizu, Izuru, Kariya-shi Aichi-ken (JP); Tarao, Susumu, Kariya-shi Aichi-ken (JP); Hishinuma, Yumin, Kariya-shi Aichi-ken (JP)
(74) Representative: HOFFMANN EITLE

(56) References cited:
- EP-A- 0 738 024
- EP-A- 1 336 760
- GB-A- 2 350 405
- US-A- 5 227 587
- US-A1- 2001 012 489
- PATENT ABSTRACTS OF JAPAN vol. 2002, no. 09, 4 September 2002 (2002-09-04) -& JP 2002 155862 A (TOYOTA INDUSTRIES CORP), 31 May 2002 (2002-05-31)

## Description

### BACKGROUND OF THE INVENTION

The present invention relates to a motor compressor mechanism; an electric motor for driving the compression mechanism in a housing thereof; a plurality of terminal pins for transmitting electric current to the electric motor; a terminal substrate fastened to the housing by a bolt so as to be fixed to a fitting surface formed on an outer peripheral surface of the housing; a plurality of holes formed through the terminal substrate; and a terminal pin inserted into each hole of the terminal substrate while being fixedly supported on the terminal substrate so as to be insulative and airtight. Such a motor compressor mechanism suitable for a motor compressor is disclosed by US 5 227 587.

Such a motor compressor has a plurality of terminal pins fixed to and extending through a housing of the motor for supplying electric current to an electric motor which is accommodated in the housing.

A structure for fixing the terminal pins to the housing is disclosed in Unexamined Japanese Patent Publication No. 2002-155862, in which a plurality of through holes is formed in the housing, and each terminal pin is supported in the housing through an O-ring and a bushing serving as an insulating member and fixed by a circular clip engaged in the through hole.

Another fixing structure is disclosed in Unexamined Japanese Patent Publication No. 2002-369439, according to which a mounting flange of a terminal having a plurality of terminal pins connected thereto is held together with an O-ring between a connecting port formed in a housing and a separate member to be connected to the connecting port to be fixed to the housing.

Carbon dioxide refrigerant gas is used under a pressure which is about ten times as high as a fluorocarbon refrigerant gas. Additionally, carbon dioxide refrigerant gas is more permeable into a rubber seal member than fluorocarbon refrigerant gas and, therefore, there is a problem that the carbon dioxide refrigerant gas leaks outside the housing.

In the case of the fixing structure disclosed in Unexamined Japanese Patent Publication No. 2002-155862, when applied to a compressor using carbon dioxide refrigerant gas, the strength of the circular clip is not sufficient in view of the pressure of the refrigerant gas which acts on each terminal pin. Furthermore, carbon dioxide refrigerant gas leaks outside the housing through the O-ring.

In the case of the fixing structure disclosed in Unexamined Japanese Patent Publication No. 2002-369439, since the connecting port which receives the terminal mounting flange fixedly supporting a plurality of the terminals and the separate member is formed in the housing, the rigidity of the connecting port and its surrounding portion is reduced. For compensation for such reduction of rigidity, the housing wall needs to be thickened. The compressor having such thickened housing wall becomes larger, and the weight thereof increases, accordingly. Therefore, there has been a need for providing a motor compressor which ensures a sufficient strength against pressure without making a terminal pin fixing portion larger and reliably prevents leakage of refrigerant gas even when carbon dioxide is used as refrigerant gas.

### SUMMARY OF THE INVENTION

The present invention relates to a motor compressor as initially described and is characterised in that a plurality of insertion holes, which extend through the housing at the fitting surface formed so as to correspond to the holes; and in that a gasket is interposed between the fitting surface and the terminal substrate, while each terminal pin is inserted into the corresponding insertion hole of the fitting surface. In accordance with an embodiment of the present invention, a motor compressor has a housing, a compression mechanism, an electric motor, a plurality of terminal pins, a terminal substrate and a gasket. The housing forms a fitting surface at an outer peripheral surface of the housing and a plurality of insertion holes extending through the housing at the fitting surface. The compression mechanism is accommodated in the housing. The electric motor is accommodated in the housing for driving the compression mechanism. A plurality of the terminal pins transmits electric current to the electric motor. The terminal substrate is fastened to the housing by a bolt so as to be fixed to the fitting surface and forms a plurality of holes. The terminal pin is inserted into each hole of the terminal substrate while being fixedly supported on the terminal substrate so as to be insulative and airtight. The insertion holes of the fitting surface correspond to the holes. The gasket is interposed between the fitting surface and the terminal substrate, while each terminal pin is inserted into the corresponding insertion holes of the fitting surface.

Embodiments of the invention will become apparent from the following description, taken in conjunction with the accompanying drawings, illustrating by way of example the principles of the invention.

### BRIEF DESCRIPTION OF THE DRAWINGS

To enable a better understanding of the present invention, and to show how the same may be carried into effect, reference will now be made, by way of example only, to the accompanying drawings, in which:
FIG. 1 is a longitudinal cross-sectional view of a motor compressor according to a preferred embodiment of the present invention;
FIG. 2 is a partially enlarged longitudinal cross-sectional view of FIG. 1;
FIG. 3 is a partially enlarged cross-sectional view about a plane perpendicular to a rotary shaft according to the first preferred embodiment of the present invention; and
FIG. 4 is an exploded perspective view of a structure for fixing terminal pins.

### DETAILED DESCRIPTION OF THE PREFERRED EMBODIMENTS

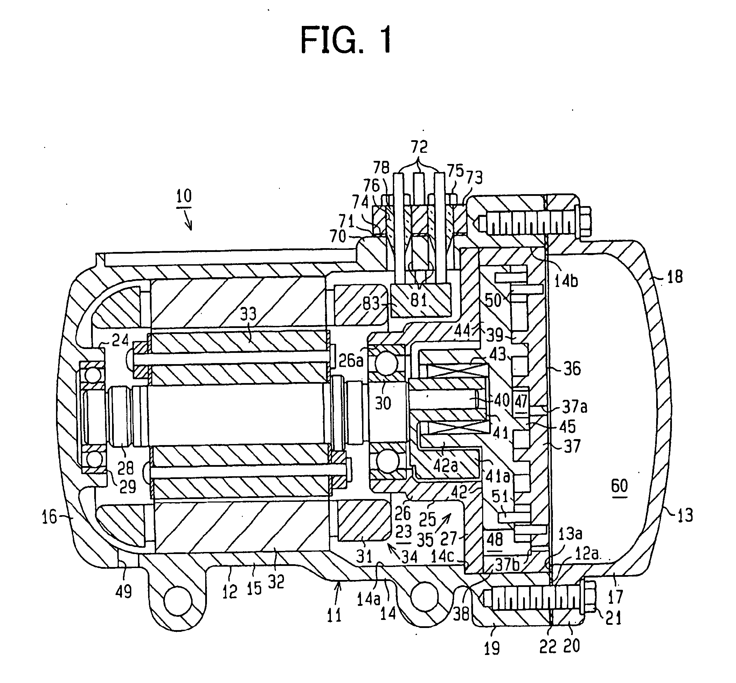

A preferred embodiment of a scroll type motor compressor for use in a vehicle air conditioner according to the present invention will now be described with reference to FIGS. 1 through 4.

As shown in FIG. 1, a motor compressor 10 has a housing 11 which includes a first housing component 12 and a second housing component 13 both of which are made of die casting aluminum alloy, and the housing 11 is formed by connecting the first housing component 12 and the second housing component 13 together. The first housing component 12 is shaped into a cylinder with a bottom at one end thereof, and includes a larger-diameter cylindrical portion 14, a smaller-diameter cylindrical portion 15 and a bottom portion 16 which closes one end of the smaller-diameter portion 15. The second housing component 13 is shaped into a cylinder with a bottom at one end thereof, including a cylindrical portion 17 having substantially the same diameter of the larger-diameter cylindrical portion 14 and a bottom portion 18 which closes one end of the cylindrical portion 17.

The inner peripheral surface of the larger-diameter cylindrical portion 14 of the first housing component 12 has a smaller-diameter portion 14a on the side of the smaller-diameter cylindrical portion 15, a larger-diameter portion 14b on the side of the open end and a retaining surface 14c at a stepped boundary between the smaller-diameter portion 14a and the larger-diameter portion 14b. A connecting surface 13a of the second housing component 13, against which a connecting surface 12a of the first housing component 12 is clamped, is formed to have an annular portion which is extended radially inner than the connecting surface 12a such that the annular portion partially faces the retaining surface 14c.

The first housing component 12 has formed integrally therewith a plurality of connecting portions 19 spaced at intervals on the outer peripheral surface of the larger-diameter cylindrical portion 14 adjacent to the open end side of the first housing component 12. The second housing component 13 has also formed integrally therewith a plurality of similar connecting portions 20 on the outer peripheral surface of the cylindrical portion 17 at spaced positions corresponding to the connecting portions 19. The first and second housing components 12, 13 are fastened together integrally at their respective connecting portions 19, 20 by bolts 21 such that the connecting surface 12a of the first housing component 12 and the connecting surface 13a of the second housing component 13 are pressed against each other through an annular gasket 22. The housing 11. thus constructed forms therein a sealed space 23. It is noted that the connecting surface 13a of the second housing component 13 and the gasket 22 have annular portions which are extended radially inner than the connecting surface 12a of the first housing component 12.

The first housing component 12 includes integrally therewith a cylindrical shaft support portion 24 at the center of the bottom portion 16 inside the first housing component 12. On the other hand, a shaft support member 25 is fitted in the larger-diameter portion 14b of the larger-diameter cylindrical portion 14 of the first housing component 12. The shaft support member 25 includes a cylindrical portion 26 forming therein a through hole 26a and a flange 27 which is formed integrally therewith at one end of the cylindrical portion 26. The shaft support member 25 is positioned in the second housing component 13 with the end surface of the flange 27 set in contact with the retaining surface 14c.

The compressor 10 includes a rotary shaft 28 which has one end received in the first housing component 12 and rotatably supported by a bearing 29 of the shaft support portion 24. The other end of the rotary shaft 28 is rotatably supported by a bearing 30 in the through hole 26a of the shaft support member 25. A stator core 32, which is wound by an exciter coil 31, is fixedly fitted inside of the smaller-diameter cylindrical portion 15 of the first housing component 12. On the other hand, a rotor 33 made of a multipolar magnet is fixedly supported by the rotary shaft 28 so as to face the stator core 32. The exciter coil 31, the stator core 32 and the rotor 33 cooperate to form an inner rotor type brushless motor 34.

A scroll type compression mechanism 35 is provided inside the larger-diameter cylindrical portion 14 of the first housing component 12. That is, a fixed scroll member 36 is fixedly fitted in the larger-diameter portion 14b of the first housing component 12. The fixed scroll member 36 includes a disc-shaped base plate 37, a cylindrical outer peripheral wall 38 formed integrally with the base plate 37 at the outer peripheral region thereof, and a fixed scroll wall 39 formed also integrally with the base plate 37 inside the outer peripheral wall 38. The outer peripheral wall 38 of the fixed scroll member 36 and the flange 27 of the shaft support member 25 are interposed between the retaining surface 14c of the first housing component 12 and the radially inner portion of the joint surface 13a of the second housing component 13 with the radially inner annular portion of the gasket 22 held between the joint surface 13a of the second housing component 13 and the base plate 37 of the fixed scroll member 36.

A crankshaft 40 is formed on the end surface of the rotary shaft 28 adjacent to the fixed scroll member 36. A bushing 41 having a balance weight 41 a is fixedly fitted over the crankshaft 40. A movable scroll member 42 facing the fixed scroll member 36 is rotatably supported by the bushing 41 through a bearing 43 disposed in the boss 42a of the movable scroll member 42 for rotation relative to the fixed scroll member 36. The crankshaft 40, the bushing 41 and the bearing 43 cooperate to form an orbiting mechanism for the movable scroll member 42 to orbit by rotation of the rotary shaft 28.

The movable scroll member 42 includes a disc-shaped base plate 44 and a movable scroll wall 45 which is formed integrally with the base plate 44. The fixed scroll wall 39 of the fixed scroll member 36 and the movable scroll wall 45 of the movable scroll member 42 engage with each other and the distal ends of the fixed and movable walls 39, 40 are in contact with the base plates 44, 37, respectively, through seal members (not shown). The fixed scroll member 36 and the movable scroll member 42 cooperate to define compression chambers 47. The innermost compression chamber 47 is communicable with the backside of the base plate 37, that is, the inner space of the second housing component 13, through a discharge port 37a which is formed at the center of the base plate 37 of the fixed scroll member 36. It is noted that the fixed scroll member 36 is provided with a known reed valve (not shown) at its back surface for opening and closing the discharge port 37a and a retainer for regulating the opening degree of the reed valve. The outer peripheral wall 38 of the fixed scroll member 36 and the outermost peripheral portion of the movable scroll wall 45 of the movable scroll member 42 define therebetween a suction chamber 48. The suction chamber 48 is in communication with the inner space of the brushless motor 34 through a path (not shown), and is connected to an evaporator of an external refrigerant circuit (not shown) through a suction port 49 which is formed in the first housing component 12 for communication between the inner space and the outside of the housing 11.

A plurality of fixed pins 50 is fixedly connected to the base plate 37 of the fixed scroll member 36 on a common circle, and a plurality of movable pins 51 is fixedly connected to the base plate 44 of the movable scroll member 42 so as to correspond with the respective fixed pins 50. The fixed pins 50 and the movable pins 51 cooperatively form a known rotation prevention mechanism of the movable scroll member 42.

The second housing component 13 forms therein a discharge chamber 60 into which compressed refrigerant gas is discharged through the discharge port 37a of the fixed scroll member 36. The discharge chamber 60 is in communication with the external refrigeration circuit outside of the housing 11 through a path (not shown) which extends through the second housing component 13.

As shown in FIG. 1, the first housing component 12 includes a seat 70 integrally therewith at the outer periphery of the larger-diameter cylindrical portion 14. The seat 70 includes at its top surface a fitting surface 71 to which a terminal substrate 73 for fixedly supporting three terminal pins 72 is fixedly connected by four bolts 75 through a gasket 74. The terminal substrate 73 has a rectangular projected plan view in the vertical direction of FIG. 1 (or a rectangular shape), and the longitudinal direction of the rectangular projected plan view (or the rectangular shape) is located along the circumferential direction of the housing 11.

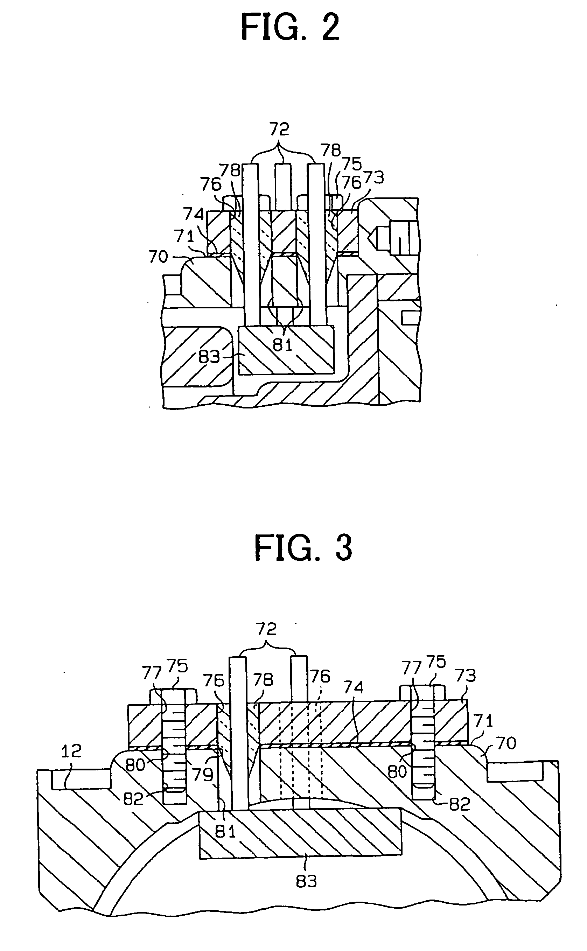

As shown in FIGS. 2 through 4, the terminal substrate 73 includes therein three holes 76 which are spaced at the same interval on a common circumference and through which the terminal pins 72 are respectively inserted. The terminal pin 72 inserted through each hole 76 is fixedly supported by an insulating member 78 which is made of glass and fills a gap between the terminal pin 72 and the hole 76 so as to be insulative against the terminal substrate 73 and to seal the hole 76 airtightly.

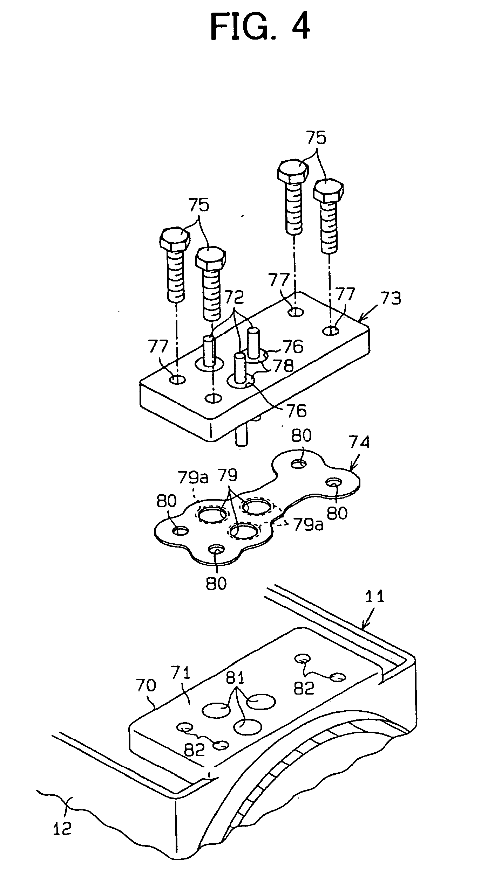

As shown in FIG. 4, the gasket 74 includes therethrough three holes 79 which have the same diameter as the holes 76 of the terminal substrate 73 so as to correspond to the holes 76. Each hole 79 has a known bead 79a at its circumference. The gasket 74 further includes therethrough four holes 80 for receiving therethrough the bolts 75 at positions corresponding to the holes 77 of the terminal substrate 73.

The seat 70 includes therethrough three insertion holes 81 which have the same diameter as the holes 76 of the terminal substrate 73 so as to correspond to the holes 76 and which extend also through the first housing component 12. The seat 70 also includes therein four threaded holes 82 which correspond to the holes 77 of the terminal substrate 73 and which receive therein the bolts 75, respectively.

As shown in FIGS. 1 through 3, the terminal substrate 73 is fastened to the fitting surface 71 of the seat 70 by four bolts 75 through the gasket 74. Each terminal pin 72, which is fixedly supported by the terminal substrate 73, is inserted through the hole 79 of the gasket 74 and into the insertion hole 81 of the seat 70, respectively. Thus, the insertion holes 81 which face their corresponding holes 76 in the terminal substrate 73 are separately sealed from each other by the gasket 74.

In the housing 11, the distal end of each terminal pin 72 is connected to a cluster block 83 which is located inside the brushless motor 34. Outside the housing 11, a cable connector is connected to each terminal pin 72 for supplying three-phase alternating current from a three-phase inverter circuit (not shown). Three-phase alternating current supplied from the three-phase inverter circuit is fed to the three-phase exciter coil 31 through the three terminal pins 72 and the cluster block 83.

According to the preferred embodiment, the following advantageous effects are obtained.
(1) Three holes 76 are separately formed in one terminal substrate 73 which is fastened by four bolts 75 to the fitting surface 71 of the seat 70 formed on the outer peripheral surface of the housing 11. The terminal pin 72 is inserted through and fixedly supported by each hole 76 such that the terminal pin 72 is insulated and sealed airtight. On the other hand, the insertion holes 81 formed in the fitting surface 71 of the seat 70 and extending through the housing 11 are provided separately so as to correspond to the respective holes 76 of the terminal substrate 73. Then, three terminal pins 72 are inserted through the corresponding insertion holes 81 with the gasket 74 interposed between the fitting surface 71 and the terminal substrate 73.
   Since the insertion holes 81 for receiving therein the terminal pins 72 which are fixedly supported by the terminal substrate 73 are separately formed in the fitting surface 71 of the seat 70 formed on the housing 11, the rigidity of the seat 70 and its vicinities will be hardly reduced. Therefore, even if the pressure of the refrigerant gas in the housing 11 is high, the seat 70 and its vicinities are hardly deformed and, therefore, a gap will not be formed between the fitting surface 71 and the terminal substrate 73. Accordingly, the seat 70 and its vicinities need not be thickened, so that the housing 11 does not increase its size and weight. Furthermore, since the gasket 74 provides an airtight seal between the fitting surface 71 and the terminal substrate 73, the amount of refrigerant gas leaked out of the housing 11 is less than the case wherein an O-ring is used. As a result, the leakage of refrigerant gas through the fixing portion of the terminal pins 72 is much reduced without increasing the size of the compressor 10.
(2) The gasket 74 has three holes 79 corresponding to the three terminal pins 72. Accordingly, a plurality of the insertion holes 81 which faces the respective holes 79 are isolated from each other with separate sealing, so that the area of the terminal substrate 73 receiving the pressure of refrigerant gas through the insertion holes 81 reduces. Therefore, the terminal substrate 73 is prevented from being deformed under the influence of the pressure of refrigerant gas, so that the terminal substrate 73 may be made thinner and, therefore, the fitting portion of the terminal substrate 73 is made smaller.
(3) The terminal substrate 73 is fastened by the bolts 75 to the substantially cylindrical housing 11 at each end of the terminal substrate 73 extending along the circumferential direction of the housing 11. Thus, a portion of the housing 11 corresponding to the ends of the terminal substrate 73 in the longitudinal direction thereof becomes thick and, therefore, the threaded holes 82 may be formed deep enough for fastening by bolts 75 without thickening the fitting portion of the terminal substrate 73. That is, the fitting portion of the terminal substrate 73 is made smaller.
(4) The housing 11 is made of aluminum alloy. In the compressor 10 in which the housing 11 is made of aluminum alloy having a lower strength than ferrous material, the seat 70 which forms the fitting surface 71 and its vicinities tend to be easily deformed under the influence of the pressure of refrigerant gas. Therefore, the advantageous effect mentioned under the above item (1) is more conspicuous in the compressor 10 having the housing 11 which is made of aluminum alloy.
(5) The compressor 10 employs carbon dioxide as refrigerant gas. In the compressor employing carbon dioxide which is used under a pressure which is about ten times as high as the fluorocarbon refrigerant gas, the seat 70 which forms the fitting surface 71 and its vicinities tend to be easily deformed due to the pressure of refrigerant gas. Therefore, the above mentioned advantageous effect (1) is more conspicuous in the compressor employing carbon dioxide as refrigerant gas.

The present invention is not limited to the embodiments described above but may be modified into the following alternative embodiments.

In an alternative embodiment to the above preferred embodiment, the gasket 74 has one hole for inserting three terminal pins 72 instead of having three holes 79.

In an alternative embodiment to the above preferred embodiment, the shape of the terminal substrate 73 as seen from the top of FIG. 1 is square, ellipse, circle, polygon or the like instead of the rectangle. In this case, the seat 70 and the fitting surface 71 have a similar shape.

In an alternative embodiment to the above preferred embodiment, the terminal pins 72 are arranged in the terminal substrate 73 in alignment with each other or on a predetermined circular arc, instead of arranging the terminal pins 72 in the terminal substrate 73 on a common circle.

In an alternative embodiment to the above preferred embodiment, intervals between the adjacent terminal pins 72 are different intervals, instead of arranging the terminal pins 72 in the terminal substrate 73 at substantially the same intervals.

In an alternative embodiment to the above preferred embodiment, the bottom portion 16 of the first housing component 12 has a seat which forms a fitting surface to which the terminal substrate is fastened by bolts.

In an alternative embodiment to the above preferred embodiment, the housing 11 is not limited to the construction having two members including the first housing component 12 and the second housing component 13, but is constituted of three or more members.

In an alternative embodiment to the above preferred embodiment, the electric motor is not limited to a brushless motor, but a DC motor is usable.

In an alternative embodiment to the above preferred embodiment, the present invention is applied to a compressor having a compression mechanism such as a piston type, a vane type and a helical type.

In an alternative embodiment to the above preferred embodiment, the present invention is applied to a motor compressor which employs a fluorocarbon refrigerant as refrigerant gas.

Therefore, the present examples and embodiments are to be considered as illustrative and not restrictive, and the invention is not to be limited to the details given herein but may be modified within the scope of the appended claims.

## Claims

1. A motor compressor (10) comprising:
a compression mechanism;
an electric motor (34) for driving the compression mechanism (35) in a housing (11) thereof;
a plurality of terminal pins (72) for transmitting electric current to the electric motor (34);
a terminal substrate (73) fastened to the housing (11) by a bolt (75) so as to be fixed to a fitting surface (71) formed on an outer peripheral surface of the housing (11);
a plurality of holes (76) formed through the terminal substrate (73); and
a terminal pin (72) inserted into each hole (76) of the terminal substrate (73) while being fixedly supported on the terminal substrate (73) so as to be insulative and airtight;
**characterised in that**
a plurality of insertion holes (81), which extend through the housing (11) at the fitting surface (71) are formed so as to correspond to the holes (76) of the terminal substrate (73); and
a gasket (74) is interposed between the fitting surface (71) and the terminal substrate (73), while each terminal pin (72) is inserted into the corresponding insertion hole (81) of the fitting surface (71).

2. The motor compressor according to claim 1, wherein the gasket (74) independently forms a plurality of holes (79) which correspond with the terminal pins (72).

3. The motor compressor according to any one of claims 1 and 2, wherein the housing (11) has a substantially cylindrical shape, the terminal substrate (73) being fastened to the housing (11) by the bolts (75) at each end thereof in a circumferential direction of the housing (11).

4. The motor compressor according to any one of claims 1 through 3, wherein the housing (11) is made of aluminium alloy.

5. The motor compressor according to any one of claims 1 through 4, wherein the motor compressor employs carbon dioxide as refrigerant.

6. The motor compressor according to any one of claims 1 through 5, wherein a plurality of the terminal pins (72) are arranged at substantially the same internal on a substantially common circle in the terminal substrate (73).

7. The motor compressor according to any one of claims 1 through 6, further comprising:
an insulating member (78) filling a gap between the terminal pins (72) and the holes (76) so as to be insulative against the terminal substrate (73) and to seal the hole airtightly.

8. The motor compressor according to claim 7, wherein the insulating member (78) is made of glass.

9. The motor compressor according to any one of claims 1 through 8, wherein the terminal substrate (73) has a rectangular shape, a longitudinal direction of the rectangular shape extending along a circumferential direction of the housing (11).

## Patentansprüche

1. Motorkompressor (10) mit:
einem Kompressionsmechanismus;
einem Elektromotor (34) zum Antreiben des Kompressionsmechanismus (35) in einem Gehäuse (11) des Kompressors;
mehreren Anschlussstiften (72), um den Elektromotor (34) mit elektrischem Strom zu versorgen;
einem Anschlusssubstrat (73), das an dem Gehäuse (11) mittels einer Schraube (75) befestigt ist, so dass es an einer Passfläche (71) fixiert ist, die an einer Außenumfangsfläche des Gehäuses (11) ausgeformt ist;
mehreren Öffnungen (76), die durch das Anschlusssubstrat (73) hindurch ausgeformt sind; und
einem Anschlussstift (72), der in jede Öffnung (76) des Anschlusssubstrats (73) eingesetzt ist, während er fest an dem Anschlusssubstrat (73) gelagert ist, so dass er isolierend und luftdicht ist;
**dadurch gekennzeichnet, dass**
mehrere Einsetzöffnungen (81), die sich bei der Passfläche (71) durch das Gehäuse (11) hindurch erstrecken, so ausgeformt sind, dass sie den Öffnungen (76) des Anschlusssubstrats (73) entsprechen; und
eine Dichtung (74) zwischen der Passfläche (71) und dem Anschlusssubstrat (73) angeordnet ist, während jeder Anschlussstift (72) in die entsprechende Einsetzöffnung (81) der Passfläche (71) eingesetzt ist.

2. Motorkompressor nach Anspruch 1, bei welchem die Dichtung (74) unabhängig mehrere Öffnungen (79) ausbildet, die mit den Anschlussstiften (72) übereinstimmen.

3. Motorkompressor nach einem der Ansprüche 1 und 2, bei welchem das Gehäuse (11) eine im Wesentlichen zylindrische Gestalt hat und das Anschlusssubstrat (73) mittels der Schrauben (75) an jedem seiner Enden in einer Umfangsrichtung des Gehäuses (11) an dem Gehäuse (11) befestigt ist.

4. Motorkompressor nach einem der Ansprüche 1 bis 3, bei welchem das Gehäuse (11) aus einer Aluminiumlegierung gemacht ist.

5. Motorkompressor nach einem der Ansprüche 1 bis 4, bei welchem der Motorkompressor Kohlendioxid als Kühlmittel verwendet.

6. Motorkompressor nach einem der Ansprüche 1 bis 5, bei welchem mehrere der Anschlussstifte (72) mit im Wesentlichen dem gleichen Abstand auf einem im Wesentlichen gemeinsamen Kreis in dem Anschlusssubstrat (73) angeordnet sind.

7. Motorkompressor nach einem der Ansprüche 1 bis 6, weiter mit einem Isolierelement (78), das einen Spalt zwischen den Anschlussstiften (72) und den Öffnungen (76) ausfüllt, so dass es gegen das Anschlusssubstrat (73) isolierend ist und die Öffnung luftdicht verschließt.

8. Motorkompressor nach Anspruch 7, bei welchem das Isolierelement (78) aus Glas gemacht ist.

9. Motorkompressor nach einem der Ansprüche 1 bis 8, bei welchem das Anschlusssubstrat (73) eine rechteckige Gestalt hat und eine Längsrichtung der rechteckigen Gestalt sich entlang einer Umfangsrichtung des Gehäuses (11) erstreckt.

## Revendications

1. Motocompresseur (10) comprenant:
un mécanisme de compression ;
un moteur électrique (34) permettant d'entraîner le mécanisme de compression (35) dans un boîtier (11) de celui-ci;
une pluralité de broches terminales (72) permettant de transmettre du courant électrique au moteur électrique (34);
un substrat terminal (73) attaché au boîtier (11) par un boulon (75) de manière à être fixé à une surface de fixation (71) formée sur une surface périphérique externe du boîtier (11) ;
une pluralité d'orifices (76) formée dans le substrat terminal (73) ; et
une broche terminale (72) insérée dans chaque orifice (76) du substrat terminal (73) tout en étant supportée de manière fixe sur le substrat terminal (73) de manière à être isolante et étanche à l'air;
**caractérisé en ce que**
une pluralité d'orifices d'insertion (81), qui s'étendent à travers le boîtier (11) au niveau de la surface de fixation (71), est formée de manière à correspondre avec les orifices (76) du substrat terminal (73) ; et
une garniture (74) est interposée entre la surface de fixation (71) et le substrat terminal (73), tandis que chaque broche terminale (72) est insérée dans l'orifice d'insertion correspondant (81) de la surface de fixation (71).

2. Motocompresseur selon la revendication 1, dans lequel la garniture (74) forme de manière indépendante une pluralité d'orifices (79) correspondant aux broches terminales (72).

3. Motocompresseur selon l'une quelconque des revendications 1 et 2, dans lequel le boîtier (11) possède une forme sensiblement cylindrique, le substrat terminal (73) étant attaché au boîtier (11) par les boulons (75) à chaque extrémité de celui-ci dans le sens circonférentiel du boîtier (11).

4. Motocompresseur selon l'une quelconque des revendications 1 à 3, dans lequel le boîtier (11) est composé d'un alliage d'aluminium.

5. Motocompresseur selon l'une quelconque des revendications 1 à 4, dans lequel le motocompresseur utilise du dioxyde de carbone comme réfrigérant.

6. Motocompresseur selon l'une quelconque des revendications 1 à 5, dans lequel une pluralité de broches terminales (72) est agencée sensiblement au même endroit, à l'intérieur, sur un cercle sensiblement commun dans le substrat terminal (73).

7. Motocompresseur selon l'une quelconque des revendications 1 à 6, comprenant en outre:
un élément isolant (78) remplissant un interstice situé entre les broches terminales (72) et les orifices (76) de manière à être isolé du substrat terminal (73) et à rendre étanche à l'air l'orifice.

8. Motocompresseur selon la revendication 7, dans lequel l'élément isolant (78) est composé de verre.

9. Motocompresseur selon l'une quelconque des revendications 1 à 8, dans lequel le substrat terminal (73) possède une forme rectangulaire, une direction longitudinale de la forme rectangulaire s'étendant dans la direction circonférentielle du boîtier (11).
